# EUROPEAN PATENT SPECIFICATION

(11) **EP 2 102 677 B1**
(45) Date of publication and mention of the grant of the patent: **20.08.2014**
(21) Application number: 07849311.1
(22) Date of filing: 03.12.2007
(51) Int. Cl.: G01S 19/35, G06F 21/12, G06F 21/43, G06F 21/73

(54) **A METHOD OF PROCESSING AN RF SIGNAL**
VERFAHREN ZUM VERARBEITEN EINES HF-SIGNALS
PROCEDE DE TRAITEMENT D'UN SIGNAL RF

(30) Priority: 04.12.2006 EP 06125357
(43) Date of publication of application: 23.09.2009
(73) Proprietor: u-blox AG, 8800 Thalwil (CH)
(72) Inventor: YULE, Andrew T., Redhill, Surrey RH1 5HA (GB); SIMMONS, Ian, Redhill, Surrey RH1 5HA (GB)
(74) Representative: O'Callaghan, Robert James
(86) International application number: PCT/IB2007/054894
(87) International publication number: WO 2008/068704

(56) References cited:
- EP-A- 0 084 441
- US-A- 5 499 295
- US-A1- 2003 046 566
- US-A1- 2004 223 614
- US-A1- 2005 021 996
- US-A1- 2006 071 850

## Description

This invention relates to a method of processing an RF signal, for example a GPS signal.

The Article "Real-time software radio architectures for GPS receivers" by Akos et al. (GPS World, July 2001) discloses GPS software receivers in which the GPS signal processing is accomplished by means of a programmable micro-processor or digital signal processor as opposed to analogue or discrete hardware components. A simplified "GPS software receiver" is provided consisting of a GPS antenna and GPS RF front end receiver for GPS signal pre-processing (including filtering, amplification and frequency down-conversion) and analogue to digital conversion.

The GPS signal samples outputted from the GPS RF front end receiver can be fed in to a modern PC running appropriate GPS signal processing software to determine a position fix. The authors of this article have contemplated the GPS software receiver in the form a "plug-in" module, i.e. a "dongle" type device, which because of its simple architecture could be manufactured cheaply, thereby facilitating widespread adoption.

Of course, the GPS signal processing software which would reside on the PC is inherently cheap to replicate.

It has been proposed to arrange the processor in the GPS receiver to first encrypt the GPS signal samples and then transmit the encrypted GPS signal samples to an external device. This is intended to address the disadvantage with conventional GPS receiver devices of the plug-in type described above. Once such a GPS receiver device has become widely disseminated and the data format in which the GPS receiver device provides the GPS signal samples known, a user is free to employ alternative GPS signal processing software to determine a position fix and not necessarily that of or authorised by the provider of the GPS receiver device. The encryption ensures that such a GPS receiver device could only be used with authorised GPS signal processing software which is able to decrypt the GPS signals samples to determine a position fix.

This approach is described in WO2004/059337, and it means that specific software must be used with a particular receiver.

However, software "piracy" is a well known problem for the software industry as a whole, and there remains a need to prevent software piracy undermining the commercial viability of developing and providing the GPS software.

US 5,499,295 discloses a hardware-software security arrangement that enables a manufacturer to provide differently configured products having substantially identical hardware and operational control software. Only authorised units are permitted to activate software-controlled optional features. This is achieved by providing a serial number ROM in the radio transceiver device, which stores an associated unique identifying bit pattern. The provision of this unique pattern in the ROM protects against the copying of the software of one radio onto another radio.

Separately, US 2003/0046566 describes a method of protecting software against unauthorised use by an unauthorised Bluetooth network interface device.

In particular, a problem encountered by companies wishing to sell or license software GPS receivers is that third parties can make copies of the software without paying the appropriate fees. This could be simple theft by a completely unauthorised party or the more subtle "3^{rd} shift problem", whereby an authorised licensee of the software distributes more copies of the software than they are entitled to and therefore only paying for a fraction.

This is not a problem commonly encountered by conventional hardware GPS vendors, as copying a physical chip (or chips) is inherently far more difficult. The invention is thus of particular interest for so-called software GPS systems as described above.

The invention aims to provide a mechanism that prevents unauthorised copying of a software GPS product, thus protecting the business interests of the owner/developer.

According to the invention, there is provided a method of receiving and processing a spread spectrum RF signal from a satellite positioning system for providing navigation information to a user having a mobile receiver, according to claim 1.

This method enables a software developer to make the system function only when there is a match between the hardware and the software. This makes copying the software as difficult as copying the hardware, because copied software will not work with the incorrect hardware.

The analogue processing of the signal can comprise down converting to an intermediate frequency. The signal is converted to a digital signal, and the unique identifier is added.

Adding an identification code may comprise adding a code derived from a wafer position of a semiconductor IC of the RF front end receiver. Each IC can have a unique code (for example based on wafer/batch number and wafer position). In theory therefore, it is possible to have a one-to-one match of the hardware with the software.

However, it is sufficient for the software to be operable only for a particular variant of the RF front end receiver IC, and for the error message to arise for other variants. It is then easy to compare how many of this variant of the IC have been manufactured and sold compared to the number of software licences sold.

Implementing the error function can comprise providing an error message, operating with reduced functionality, or not processing the digital output.

The RF signal comprises a spread spectrum signal received from a satellite based navigation system (such as GPS) and further processing the digital output is to provide navigation information.

The invention also provides a method of manufacturing an RF front end receiver, according to claim 6.

By matching an identification code of the RF front end receiver hardware with the software provider, it becomes possible to track the sale of software licences with the sale of the hardware.

Thus, a method of manufacturing and monitoring an RF front end receiver, comprises manufacturing the RF front end receiver using this method, selling the RF front end receiver and notifying the software provider of the identity of the purchaser of the RF front end receiver.

The invention also provides a computer program comprising computer program code means according to claim 8.

The invention also provides an RF signal receiver, according to claim 9.

The present invention will now be described, by way of example only, with reference to the accompanying schematic drawings in which:
Figure 1 shows a conventional GPS receiver architecture in schematic form;
Figure 2 shows the RF front end receiver in greater detail; and
Figure 3 is used to explain the method of the invention.

The invention relates to RF signal receivers generally, but is of particular interest for so-called "software GPS", namely a GPS system in which all the data processing is implemented in software, with the received data stored in a memory buffer. This enables the real time link of the receiver to be broken, and reduces the amount of dedicated hardware required (such as correlators).

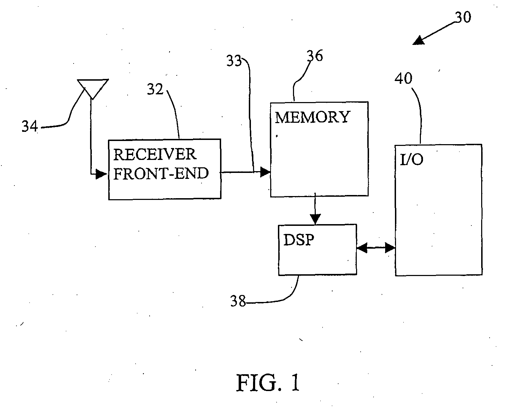

The basic architecture of a software GPS receiver 30 is represented in Figure 1.

The receiver comprises a receiver front end 32, which receives the wireless signals using an antenna 34. The receiver front end 32 receives modulated RF signals from one or more satellites.

The received signal is amplified, filtered, down-converted, and digitized by the receiver front end 32 to produce a baseband signal 33 derived from the received signal, and in the form of digitised samples.

The digitised samples are provided to a memory buffer 36, and the data stored in the memory 36 is processed by a general purpose CPU i.e. a digital signal processor (DSP) 38. A user interface is provided by input/output system 40. The digitised samples are processed to extract the information and data from the satellite signals. The data samples are typically in the form of one or two bit data, and at a much higher analogue to digital sampling rate than the data rate of the signals received from the satellites.

The DSP 38 implements the functions of more conventional dedicated hardware systems, of correlation, multiplexing and Fourier transformations, in known manner.

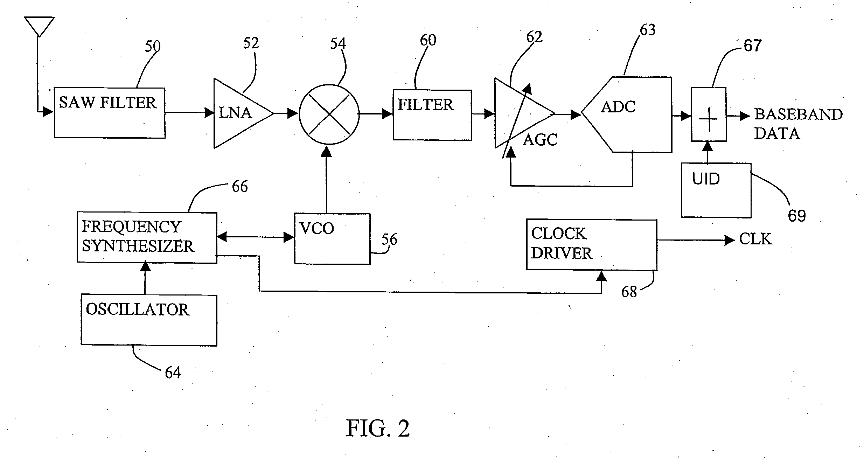

Figure 2 shows the RF front end receiver 32 in greater detail.

The signals received from the antenna are filtered by a surface acoustic wave (SAW) filter 50 before amplification by a low noise amplifier (LNA) 52. The signals are mixed at mixer 54 with the output of a voltage controlled oscillator (VCO) 56. This down converts the signals to baseband, where they are subjected to further filtering by filter 60 and amplification with automatic gain control (AGC) in the amplifier 62. Analogue to digital conversion takes place in converter 63, which also provides a feedback control for the AGC setting. The RF front end receiver also includes an oscillator 64 and frequency synthesizer 66 as shown, with the frequency synthesiser controlling a clock driver 68 to generate a clock signal CLK.

The invention concerns in particular the link between the RF front end receiver and the DSP, as shown by arrow 33 in Figure 1, and the processing implemented in the DSP 38.

The invention provides an identification code unique to the RF front end receiver hardware at this interface, and this code can be validated in software in the DSP. Thus, the software can be tied to specific hardware. This means the ease of copying the software does not enable a functioning system to be implemented, as the copied software will not (or is unlikely to) match a different RF front end receiver hardware. Even if there is a match (because the software is only sensitive to a batch of RF front end receiver chips) a mismatch between hardware and software sales can then be detected.

Figure 2 shows a UID added to data at the output of the analogue to digital converter 63, in data combiner 67, which is supplied with the UID from unit 69.

In a first aspect, the invention assumes that manufacturers of the RF front end chips used in the software GPS receivers are prepared to cooperate with the developers of the software GPS code.

In particular, this aspect of the invention requires the front end chip manufacturers to create a custom variant of the RF front end specifically for the software GPS developer. This doesn't mean the manufacturer will necessarily supply that variant to the software developer, but they will provide the software developer with the order size and purchaser of all orders of that variant.

All the RF front end chips will contain a unique identifier ("UID"), in such a way that no other front end (of any variant of the chip), will contain the same UID. The RF front end is then designed in such a way that, during normal operation, the UID is embedded into the intermediate frequency ("IF") data stream output by the chip in a known manner.

The software developer is thus able to write the software GPS code in such a way that, during operation, it will extract the UID from the IF data stream and check that it is valid, and refuse to operate if not. This renders unauthorised copying unprofitable as the software developer can be told by the RF front end vendor of any additional chip sales.

The simplest form of the invention would involve a software GPS developer ("The Software Developer") designing their software to run with a particular RF front end model number "RF Model N" made by a particular manufacturer "The Manufacturer".

The design of the RF Model N is such that it contains for example a 64 bit UID "burnt in" by laser on the production line.

This UID can be made up of fields that include:
- the position of the chip on the wafer;
- the wafer number; and
- a variant number (for example 8 bits).

The UID is therefore unique and no two chips will contain the same number.

A first variant can have the variant number set to 0 for all chips. The Software Developer can then agree with The Manufacturer to make a variant of the RF Model N, called the "RF Model N version 2" and that all such variants will be identical to the Model N, except that the 8 bit variant field will always be 1. The Manufacturer can then agree to make no other variants for which the variant field is also 1.

The RF front end receiver is designed in such a way that it periodically embeds the UID into the IF data stream it outputs when it is operating.

The Manufacturer also agrees to provide The Software Developer with details of all orders for the "RF Model N version 2" variant, including the size of order and identity of the purchaser.

The Software Developer can then develop a software GPS product and license it to a 3^{rd} party developer. The Software Developer then tells the 3^{rd} party developer that they need to use the "RF Model N version 2" in their design, and at run time the software is written in such a way as to extract the UID from the IF data stream it processes.

If the UID does not contain a variant field with the appropriate value (1 in this case), then the software will not operate correctly.

In this example, only the variant number needs to be analysed by the DSP. Of course, a particular variant number can be considered to equate to a set of UID codes.

This implementation provides software mapped to a chip model number or variant, and this may comprise many thousands of chips. It is equally possible to have finer control. For example the software can look for matches with any number of UIDs from one UID (i.e. matching one bespoke software to a single piece of hardware) to a batch of many thousands of chips.

The method by which the UID is embedded in the IF data stream could be as simple a inserting the full code (e.g. 64 bit) for example every 1024 bits, either by overwriting the IF data samples that would otherwise have been output or by actually inserting the code between adjacent IF samples. However the UID could also be spread out in the IF data stream - in the limit one bit at a time, inserted at intervals of for example 32 bits.

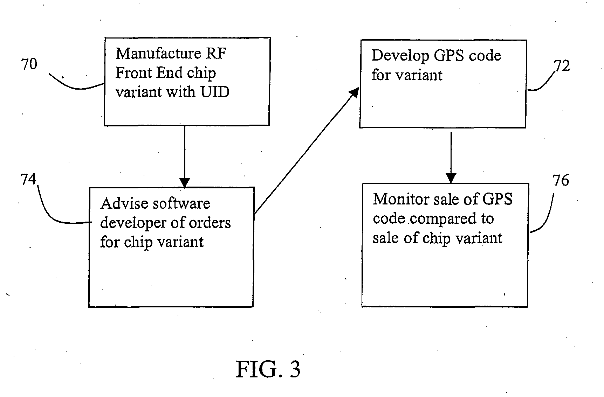

The methodology is shown in Figure 3.

The Manufacturer carries out the steps of manufacturing the chip (step 70) with the embedded UID, which has been agreed with The Software Developer. In parallel, the GPS code is developed (step 72) for the particular variant having the agreed batch of UIDs. After sale of the hardware, The Manufacturer continues to advise The Software Developer about the sales of the variant (step 74) and The Software Developer monitors the sale or licence of the GPS code (step 76), which should match the chip sales.

As mentioned above, The Manufacturer can provide The Software Developer with detailed information of the precise UIDs supplied to each customer who orders the "RF Model N version 2", thus allowing The Software Developer to make variants of their software that are specifically linked to the UIDs purchased by a specific customer or customers.

In the case where an invalid UID or no UID is detected by the software, a number of possibilities are available:
- simply stopping;
- reporting an error message to the user; and
- operating with degrade performance (with or without a message to the user).

The UID could include some form of cyclic redundancy check or indeed encryption to make it harder to fake.

The manner in which the UID is embedded could be controlled by the software (by sending appropriate control signals to the front end). This could include changing the period, number of bits at a time, turning off completely, only inserting it once on request, whether true insertion or overwriting is used. All of this would make it harder for third parties to "break" the scheme.

The chips could also include an EEPROM that would allow the code embedded in the IF stream to be augmented or replaced by a code uploaded at run-time into the front end. This feature could be used in association with some form of "registration" (for example with an online server run by The Software Developer) in which the UID is submitted and if valid, an encrypted code based on the UID is returned.

The software GPS code would, in this case, be written so as to only function fully, if both a legal UID and matching encrypted code were visible. This option is particular relevant if The Manufacturer can't or won't provide either a custom variant or sufficient details of purchased chips, as it allows The Software Developer to secure their software on the UID without any previous knowledge of the UID.

The system of the invention allows protection for software linked with the software forming the software GPS code, for example navigation applications and the maps used.

The benefits of known software GPS systems can all be obtained in the system of the invention. For example, the system of the invention can be used for live processing of the sampled GPS data, as soon as it is available from the memory buffer, or the processing may take place later and also possibly at a different location. Thus, the receiver may not include all of the processing capability for interpreting the GPS data.

The invention has been described above in connection with software GPS, but it could equally apply to other navigation systems and/or other software radios. The invention is thus also equally applicable to the Galileo navigation system currently under development.

It is noted that the manufacture and sale of chips that include unique IDs (UIDs) is well known, for example for EEPROM chips, and the provision of a UID will therefore be routine to those skilled in the art.

From a reading of the present disclosure, other modifications will be apparent to the skilled person and may involve other features which are already known in the design, manufacture and use of GPS receivers and component parts thereof and which may be used instead of or in addition to features already described herein.

## Claims

1. A method of receiving and processing a spread spectrum RF signal from a satellite based positioning system for providing navigation information to a user having a mobile receiver, comprising:
within an RF front end receiver of the mobile receiver:
receiving the RF signal;
analogue-processing and digitising the RF signal to produce digitised samples; and
providing a digital output signal including the digitised samples,
the method **characterised by**:
providing the digital output signal to include an identification code unique to the RF front end receiver hardware,
further providing the digital output signal to a digital signal processor; and
within the digital signal processor, comparing the identification code with a predetermined identification code or set of codes to determine if there is match, and if there is a match, further processing the digital output signal to provide the navigation information to the user, and if there is not a match, implementing an error function.

2. A method as claimed in claim 1, wherein analogue-processing the RF signal comprises down converting to an intermediate frequency.

3. A method as claimed in any preceding claim, wherein adding an identification code comprises adding a code derived from a wafer position of a semiconductor IC of the RF front end receiver.

4. A method as claimed in claim 3, wherein adding an identification code comprises adding a code derived from a batch number of the semiconductor IC.

5. A method as claimed in any preceding claim, wherein implementing the error function comprises providing an error message, operating with reduced functionality, or not processing the digital output.

6. A method of manufacturing an RF front end receiver for receiving a spread spectrum signal from a satellite based positioning system, the method comprising:
fabricating an RF front end receiver (32), wherein the RF front end receiver is adapted to provide a digital output signal to a digital signal processor,
**characterised in that** the RF front end receiver (32) is fabricated with an embedded identification code unique to the RF front end receiver hardware and is adapted to include the identification code in the digital output signal,
wherein the embedded identification code is agreed with a software provider of the software to be implemented in the digital signal processor for processing the digital output signal.

7. A method of manufacturing and monitoring an RF front end receiver, comprising:
manufacturing the RF front end receiver (32) using the method of claim 6;
selling the RF front end receiver; and
notifying the software provider of the identity of the purchaser of the RF front end receiver.

8. A computer program comprising computer program code means adapted to analyse a digital signal comprising a digitally sampled signal corresponding to a spread spectrum RF signal from a satellite based navigation system for providing navigation information to a user, the digital signal **characterised by** further comprising an identification code unique to the hardware of an RF front end receiver at which the RF signal was received, wherein the analysis is **characterised by** comparing the identification code with a predetermined identification code or set of codes to determine if there is match, and if there is a match, further processing the digital output to provide the data to the user, and if there is not a match implementing an error function.

9. An RF signal receiver for receiving a spread spectrum RF signal from a satellite based navigation system, comprising:
an antenna for receiving the RF signal;
an RF front end receiver (32) adapted:
to analogue-process and digitise the RF signal to produce digitised samples; and
to provide a digital output signal including the digitised samples;
a digital signal processor (38) adapted to receive the digital output signal; and
software implemented within the digital signal processor,
**characterised in that** the RF front end receiver (32) is adapted to include in the digital output signal an identification code unique to the RF front end receiver hardware,
wherein the software is adapted to compare the identification code with a predetermined identification code or set of codes to determine if there is match, and if there is a match to further process the digital output to provide navigation information to the user, and if there is not a match to implement an error function.

10. A receiver as claimed in claim 9, wherein the RF front end receiver is adapted to down convert the RF signal to an intermediate frequency.

11. A receiver as claimed in claim 9 or 10, wherein the identification code comprises a code derived from a wafer position of a semiconductor IC of the RF front end receiver.

12. A receiver as claimed in claim 11, wherein the identification code comprises a code derived from a wafer batch number of the semiconductor IC.

13. A receiver as claimed in any one of claims 9 to 12, wherein the error function comprises an error message, a mode of operation with reduced functionality, or a function to not process the digital output.

## Patentansprüche

1. Verfahren zum Empfangen und Verarbeiten eines Spread-Spectrum-HF-Signals von einem satellitenbasierten Ortungssystems zur Bereitstellung von Navigationsinformationen an einen Benutzer mit einem mobilen Empfänger, umfassend:
in einem HF-Front-End-Empfänger des mobilen Empfängers:
Empfangen des HF-Signals;
analoges Verarbeiten und Digitalisieren des HF-Signals, so dass digitalisierte Samples erzeugt werden; und
Bereitstellen eines digitalen Ausgangssignals, das die digitalisierten Samples aufweist;
wobei das Verfahren **gekennzeichnet ist durch**:
Bereitstellen des digitalen Ausgangssignals, so dass dieses einen für die HF-Front-End-Empfängerhardware eindeutigen Identifikationscode enthält;
weiteres Bereitstellen des digitalen Ausgangssignals an einen digitalen Signalprozessor; und
in dem digitalen Signalprozessor, Vergleichen des Identifikationscodes mit einem vorbestimmten Identifikationscode oder einer Reihe von Codes, um zu bestimmen, ob eine Übereinstimmung gegeben ist, und bei Übereinstimmung, weiteres Verarbeiten des digitalen Ausgangssignals, um die Navigationsinformationen an den Benutzer bereitzustellen, und bei fehlender Übereinstimmung, Implementieren einer Fehlerfunktion.

2. Verfahren nach Anspruch 1, wobei das analoge Verarbeiten des HF-Signals das Abwärtswandeln in eine Zwischenfrequenz umfasst.

3. Verfahren nach einem der vorstehenden Ansprüche, wobei das Hinzufügen eines Identifikationscodes das Hinzufügen eines aus einer Wafer-Position einer integrierten Halbleiterschaltung des HF-Front-End-Empfängers gewonnenen Codes umfasst.

4. Verfahren nach Anspruch 3, wobei das Hinzufügen eines Identifikationscodes das Hinzufügen eines aus einer Chargenbezeichnung der integrierten Halbleiterschaltung gewonnenen Codes umfasst.

5. Verfahren nach einem der vorstehenden Ansprüche, wobei das Implementieren der Fehlerfunktion das Bereitstellen einer Fehlernachricht, den Betrieb mit reduzierter Funktionalität oder die Nichtverarbeitung der digitalen Ausgabe umfasst.

6. Verfahren zum Herstellen eines HF-Front-End-Empfängers zum Empfangen eines Spread-Spectrum-Signals von einem satellitenbasierten Ortungssystem, wobei das System folgendes umfasst:
Fertigen eines HF-Front-End-Empfängers (32), wobei der HF-Front-End-Empfänger ein digitales Ausgangssignal an einen digitalen Signalprozessor bereitstellen kann;
**dadurch gekennzeichnet, dass** der HF-Front-End-Empfänger (32) mit einem eingebetteten Identifikationscode gefertigt wird, der für die HF-Front-End-Empfängerhardware eindeutig ist, und wobei der Identifikationscode in das digitale Ausgangssignal integriert werden kann;
wobei der eingebettete Identifikationscode mit einem Softwareprovider der Software abgestimmt ist, die in dem digitalen Signalprozessor zum Verarbeiten des digitalen Ausgangssignals implementiert werden soll.

7. Verfahren zum Herstellen und Überwachen eines HF-Front-End-Empfängers, umfassend:
Herstellen des HF-Front-End-Empfängers (32) unter Verwendung des Verfahrens nach Anspruch 6;
Verkaufen des HF-Front-End-Empfängers; und
Mitteilen der Identität des Käufers des HF-Front-End-Empfängers an den Softwareprovider.

8. Computerprogramm, das eine Computerprogrammcodeeinrichtung umfasst, die ein digitales Signal analysieren kann, umfassend ein digital abgetastetes Signal, das einem Spread-Spectrum-HF-Signal eines satellitenbasierten Navigationssystems zur Bereitstellung von Navigationsinformationen an einen Benutzer entspricht, wobei das digitale Signal **dadurch gekennzeichnet ist, dass** es ferner einen für die Hardware eines HF-Front-End-Empfängers, an dem das HF-Signal empfangen wurde, eindeutigen Identifikationscode umfasst, wobei die Analyse **gekennzeichnet ist durch** das Vergleichen des Identifikationscodes mit einem vorbestimmten Identifikationscode oder einer Reihe von Codes, um zu bestimmen, ob eine Übereinstimmung gegeben ist, und wobei bei Übereinstimmung das digitale Ausgangssignal weiter verarbeitet wird, um die Navigationsinformationen an den Benutzer bereitzustellen, und wobei bei fehlender Übereinstimmung eine Fehlerfunktion implementiert wird.

9. HF-Signalempfänger zum Empfangen eines Spread-Spectrum-HF-Signals von einem satellitenbasierten Navigationssystem, umfassend:
eine Antenne zum Empfangen des HF-Signals;
einen HF-Front-End-Empfänger (32), der folgendes ausführen kann:
analoges Verarbeiten und Digitalisieren des HF-Signals, so dass digitalisierte Samples erzeugt werden; und
Bereitstellen eines digitalen Ausgangssignals, das die digitalisierten Samples aufweist;
einen digitalen Signalprozessor (38), der das digitale Ausgangssignal empfangen kann; und
**dadurch gekennzeichnet, dass** der HF-Front-End-Empfänger (32) einen für die HF-Front-End-Empfängerhardware eindeutigen Identifikationscode in das digitale Ausgangssignal integrieren kann;
wobei die Software den Identifikationscode mit einem vorbestimmten Identifikationscode oder einer Reihe von Codes vergleichen kann, um zu bestimmen, ob eine Übereinstimmung gegeben ist, und wobei bei Übereinstimmung die digitale Ausgabe weiter verarbeitet wird, um Navigationsinformationen an den Benutzer bereitzustellen, und wobei bei fehlender Übereinstimmung eine Fehlerfunktion implementiert wird.

10. Empfänger nach Anspruch 9, wobei der HF-Front-End-Empfänger das HF-Signal in eine Zwischenfrequenz abwärtswandeln kann.

11. Empfänger nach Anspruch 9 oder 10, wobei der Identifikationscode einen Code umfasst, der aus einer Wafer-Position einer integrierten Halbleiterschaltung des HF-Front-End-Empfängers gewonnen wird.

12. Empfänger nach Anspruch 11, wobei der Identifikationscode einen Code umfasst, der aus einer Wafer-Chargenbezeichnung der integrierten Halbleiterschaltung gewonnen wird.

13. Empfänger nach einem der Ansprüche 9 bis 12, wobei die Fehlerfunktion eine Fehlernachricht, einen Betriebsmodus mit reduzierter Funktionalität oder eine Funktion, die digitale Ausgabe nicht zu verarbeiten, umfasst.

## Revendications

1. Procédé de réception et de traitement d'un signal RF à spectre étalé en provenance d'un système de positionnement par satellite pour fournir des informations de navigation à un utilisateur ayant un récepteur mobile, comprenant les étapes consistant à :
dans un récepteur frontal RF du récepteur mobile :
recevoir le signal RF ;
traiter de façon analogique et numériser le signal RF pour produire des échantillons numérisés ; et
fournir un signal de sortie numérique comprenant les échantillons numérisés,
le procédé étant **caractérisé par** les étapes consistant à :
fournir le signal de sortie numérique pour inclure un code d'identification unique au matériel récepteur frontal RF,
fournir en outre le signal de sortie numérique à un processeur de signal numérique ; et
dans le processeur de signal numérique, comparer le code d'identification à un code d'identification prédéterminé ou à un ensemble de codes afin de déterminer s'il y a correspondance, et s'il y a correspondance, soumettre à un traitement complémentaire le signal de sortie numérique pour fournir les informations de navigation à l'utilisateur, et s'il n'y a pas correspondance, implémenter une fonction d'erreur.

2. Procédé selon la revendication 1, dans lequel le traitement analogique du signal RF comprend l'étape consistant à abaisser la fréquence à une fréquence intermédiaire.

3. Procédé selon l'une quelconque des revendications précédentes, dans lequel l'ajout d'un code d'identification comprend l'étape consistant à ajouter un code dérivé d'une position de tranche d'un CI à semi-conducteurs du récepteur frontal RF.

4. Procédé selon la revendication 3, dans lequel l'ajout d'un code d'identification comprend l'étape consistant à ajouter un code dérivé d'un certain nombre de CI à semi-conducteurs.

5. Procédé selon l'une quelconque des revendications précédentes, dans lequel l'implémentation de la fonction d'erreur comprend les étapes consistant à fournir un message d'erreur, fonctionner avec des fonctionnalités réduites ou ne pas traiter la sortie numérique.

6. Procédé de fabrication d'un récepteur frontal RF pour recevoir un signal à spectre étalé en provenance d'un système de positionnement par satellite, le procédé comprenant l'étape consistant à :
fabriquer un récepteur frontal RF (32), dans lequel le récepteur frontal RF est conçu pour fournir un signal de sortie numérique à un processeur de signal numérique,
**caractérisé en ce que** le récepteur frontal RF (32) est fabriqué avec un code d'identification intégré unique au matériel récepteur frontal RF et conçu pour inclure le code d'identification dans le signal de sortie numérique,
dans lequel le code d'identification intégré est convenu avec un fournisseur de logiciel du logiciel à implémenter dans le processeur de signal numérique pour traiter le signal de sortie numérique.

7. Procédé de fabrication et de surveillance d'un récepteur frontal RF, comprenant les étapes consistant à :
fabriquer le récepteur frontal RF (32) en utilisant le procédé selon la revendication 6 ;
vendre le récepteur frontal RF ; et
avertir le fournisseur de logiciel de l'identité de l'acheteur du récepteur frontal RF.

8. Programme informatique comprenant des moyens de code de programme informatique conçus pour analyser un signal numérique comprenant un signal échantillonné de façon numérique correspondant à un signal RF à spectre étalé en provenance d'un système de navigation par satellite pour fournir des informations de navigation à un utilisateur, le signal numérique étant **caractérisé en ce qu'**il comprend en outre un code d'identification unique au matériel d'un récepteur frontal RF auquel le signal RF a été reçu, dans lequel l'analyse est **caractérisée par** la comparaison du code d'identification à un code d'identification prédéterminé ou à un ensemble de codes afin de déterminer s'il y a correspondance, et s'il y a correspondance, soumettre à un traitement complémentaire la sortie numérique pour fournir les données à l'utilisateur, et s'il n'y a pas correspondance, implémenter une fonction d'erreur.

9. Récepteur de signal RF destiné à recevoir un signal RF à spectre étalé en provenance d'un système de navigation par satellite, comprenant :
une antenne pour recevoir le signal RF ;
un récepteur frontal RF (32) conçu pour :
traiter de façon analogique et numériser le signal RF pour produire des échantillons numérisés ; et
fournir un signal de sortie numérique comprenant les échantillons numérisés,
un processeur de signal numérique (38) conçu pour recevoir le signal de sortie numérique ; et
un logiciel implémenté dans le processeur de signal numérique,
**caractérisé en ce que** le récepteur frontal RF (32) est conçu pour inclure dans le signal numérique de sortie un code d'identification unique au matériel récepteur frontal RF,
dans lequel le processeur est conçu pour comparer le code d'identification à un code d'identification prédéterminé ou à un ensemble de codes afin de déterminer s'il y a correspondance, et s'il y a correspondance, soumettre à un traitement complémentaire le signal de sortie numérique pour fournir les informations de navigation à l'utilisateur, et s'il n'y a pas correspondance, implémenter une fonction d'erreur.

10. Récepteur selon la revendication 9, dans lequel le récepteur frontal RF est conçu pour abaisser en fréquence le signal RF à une fréquence intermédiaire.

11. Récepteur selon la revendication 9 ou 10, dans lequel le code d'identification comprend un code dérivé à partir d'une position de tranche d'un CI à semi-conducteurs du récepteur frontal RF.

12. Récepteur selon la revendication 11, dans lequel le code d'identification comprend un code dérivé à partir d'un numéro de lot de tranches du CI à semi-conducteurs.

13. Récepteur selon l'une quelconque des revendications 9 à 12, dans lequel la fonction d'erreur comprend un message d'erreur, un mode de fonctionnement avec des fonctionnalités réduites ou une fonction pour ne pas traiter la sortie numérique.
